# EUROPEAN PATENT APPLICATION

(11) **EP 3 678 074 A1**
(43) Date of publication of application: **08.07.2020**
(21) Application number: 19150542.9
(22) Date of filing: 07.01.2019
(51) Int. Cl.: G06Q 10/06, G05D 1/00

(54) **MULTI-VEHICLE CONTROL METHOD**

(71) Applicant: Universität der Bundeswehr München, 85579 Neubiberg (DE)
(72) Inventor: Heilemann, Felix, 81543 München (DE); Schmitt, Fabian, 81543 München (DE); Brand, Yannick, 85653 Aying (DE); Schulte, Axel, 82054 Sauerlach (DE)
(74) Representative: Valvoda, Jakob

(57) **Abstract**

The present disclosure relates to controlling of vehicles. In particular, the present disclosure relates a computer-implemented method for controlling at least one vehicle in a group of vehicles. A planning device operating in one of a plurality of operation modes has mission parameters stored therein. The planning device obtains a mission plan and mission parameters, the mission parameters including at least one mission task. The planning device receives additional configuration data and assigns mission tasks to vehicles. The planning device generates instructions for the mission tasks based on the mission plan, the mission parameters, the operation mode, and the additional configuration data. The instructions are transmitted to the vehicles.

## Description

### TECHNICAL FIELD

The present disclosure relates to controlling of vehicles. In particular, the present disclosure relates to a controlling method for assisting an operator of a vehicle in controlling of a group of vehicles.

### BACKGROUND

Unmanned vehicles have gained importance in the civil as well as in the military sector. While in civil application, the unmanned vehicles are mainly employed for observation, image and video acquisition, delivery, rescue, and transportation, but also for recreation and sport competition, the military application range includes reconnaissance, transportation, rescue, information search, information retrieval, information delivery, but also contact to opposite party troops.

Vehicles according to the present disclosure include vehicles operating in space, air, in or on water, and on land. This includes a plurality of different vehicles. For examples, planes, helicopters, drones, cars, buses, HGVs, vans, tanks, trains, ships, submarines, space ships, motorbikes, subways, trams, etc. This list is not meant to be limiting, and refers to all sizes of vehicles as well.

Benefits of unmanned vehicles are manifold. They reduce several limitations that are a direct consequence of human contribution to a manned vehicle. Examples are: need for trained operators, operation breaks for rest, human error, etc.

Unmanned vehicles also increase overall safety for humans by reducing the danger that an on-board operator would face in hostile environments like under-water, in space, in extreme temperatures, or in combat situations.

Finally, elimination of human reaction time and human error can make unmanned vehicles more efficient and effective and can also lead to reduced energy and fuel consumption due to optimized operation of engines.

Remote control of unmanned vehicles is known in the art as is static programming for executing a set of commands. Also known is an operator, which is not necessarily close to an unmanned vehicle, manually planning a mission, which comprises several tasks for one or more vehicles. An example of manual planning is e.g. air traffic control. Further known are fully automated applications like air defense, where a system recognizes and executes a mission without operator input or control.

Fully automated systems lack context awareness and recognition of meaningful alternatives beyond their original programming. Manual planning and operation bears the aforementioned problems of human reaction time and can expose the operator to a high level of stress in critical situations.

Further, if a group of vehicles is operated by one operator, the plurality of controlling operations reach a level of complexity that can possibly not be managed by a single person. At the same time, in such situations, a fully automated system could lead to unwanted results due to the amount of non-foreseeable parameters, and in particular cannot be supervised in real-time by a human operator anymore.

In light of the aforementioned short-comings of the prior art the objective of the present disclosure is therefore controlling of at least one of a group of vehicles by an operator with reduced stress and optimized efficiency and effectiveness.

### SUMMARY

The present disclosure solves this aforementioned objective by a computer-implemented method, a planning device, a vehicle, and a computer program product according to the independent claims. Preferred embodiments are disclosed in the dependent claims.

According to a first aspect of the present disclosure, a computer-implemented method for controlling at least one vehicle in a group of vehicles by a planning device is defined, wherein the planning device is operating in one of a plurality of operation modes and having mission parameters stored therein. The method comprises obtaining, at the planning device, a mission plan and mission parameters, the mission parameters including at least one mission task, receiving, by the planning device, additional configuration data; assigning, by the planning device, each mission task to one vehicle, and generating, by the planning device, instructions for each mission task based on the mission plan, the mission parameters, the operation mode, and the additional configuration data; and transmitting, by the planning device, to each vehicle the corresponding instructions for each assigned mission task.

The beneficial effects of aspects and embodiments of the disclosure include the flexibility of the resulting group of vehicles due to the versatile operation modes. Further, the mission parameters are taken into account and lead to an effective mission.

According to a preferred embodiment of the first aspect, the step of generating further comprises determining further dependent mission tasks based on the mission tasks included in the mission parameters and the mission plan; and if dependent mission tasks are determined, the step of assigning further comprises assigning each of the determined dependent mission tasks to one vehicle using a planning algorithm and a cost metric, the step of generating further comprises instructions for each of the dependent mission tasks, and the step of transmitting further comprises transmitting each of the instructions for the determined dependent mission tasks to the assigned vehicles.

In yet another embodiment of the first aspect, the step of assigning further comprises assigning each of the mission tasks to one vehicle using a planning algorithm and a cost metric.

In one embodiment of the first aspect, the additional configuration data comprises selection of the vehicle from the group of vehicles; wherein the step of generating further comprises determining based on a cost metric the best order of mission tasks for the selected vehicle; and the step of assigning comprises assigning each mission task to the selected vehicle on the basis of the determined order.

According to one embodiment of the first aspect, the additional configuration data comprises selection of the vehicle from the group of vehicles and a selected order of mission tasks; wherein the step of assigning comprises assigning each mission task to the selected vehicle on the basis of the selected order.

According to yet another embodiment of the first aspect, the method further comprises indicating a dependency conflict to an operator, if dependencies cannot be resolved by the planning device.

According to yet another embodiment of the first aspect, the method further comprises receiving a response from the operator; and resolving the dependency conflict on the basis of the operator's response.

In a further embodiment of the first aspect, the method further comprises determining, whether one of the mission tasks is complex, and dividing mission tasks that are determined to be complex into sub-tasks.

A second aspect of the present disclosure defines a planning device, configured to execute a method according to one embodiment of the first aspect.

According to one embodiment of the second aspect, the planning device can be installed in one vehicle of a group of vehicles or installed in more than one vehicle of the group of vehicles, wherein the planning device is implemented as a distributed processing device, or installed at a location distant to the vehicles.

A third aspect of the present disclosure specifies a vehicle equipped with a planning device according to one embodiment of the second aspect.

According to yet another aspect of the present disclosure, a computer program product including a program for a processing device is defined, comprising software code portions for performing the steps of a method according to an embodiment of the first aspect, when the program is run on the processing device.

In one embodiment, the computer program product comprises a computer-readable medium on which the software code portions are stored, wherein the program is directly loadable into an internal memory of the processing device.

Aspects and embodiments of the present disclosure can support the operator of one or more vehicles. A planning device can provide this support to the operator. The operation modes can differ in the level of support that is provided to the operator. This can range from a basic level of support to a fully automated mission planning by the planning device, with only minimal or no input required by the operator.

For a group of vehicles, the operator can be in one of the vehicles. The operator could also remotely operate the vehicles. The planning device can be installed in one of the vehicles. Alternatively, it can be installed in more than one vehicle, as a distributed processing device. Finally, the planning device can also be installed at a location distant from the vehicles. If the operator is in one of the vehicles of the group, aspects and embodiments of the presented disclosure have several advantages over known devices. With the operator being close to the vehicles, the transmission energy can be reduced, since only short distances need to be achieved with the transmission between vehicles. This improves also the ability to work undetected or without interfering with devices present in the area. Also, areas with limited radio reception are more accessible thereby. Further, reaction time for the operator is reduced since he is within the group of vehicles, and the operator has the additional advantage of being able to see the area of interest.

Aspects and embodiments of the disclosure can be implemented for a group consisting of one or more manned and/or unmanned vehicles. Prior to executing, a mission requires planning. Planning a mission includes generating a mission plan, i.e. producing a sequential order of tasks with consideration of temporal and logical constraints.

Also, tasks can be assigned to individual vehicles. Some vehicles of the group of vehicles can have specialized equipment or abilities, which are advantageous or required for a task. For example, one vehicle of a group could have the capacity to transport an almost drowned person, a special medical capability, or equipment for certain tasks like image recording or weather sensing. One vehicle could be able to hover or dive, which could facilitate certain tasks.

Ideally, required or beneficial characteristics or equipment will be present in the group of vehicles redundantly in case of loss of a vehicle.

The loss of a vehicle, but also other incidents during the mission could require modifications to the generated mission plan. Examples of such incidents are changes in weather conditions, unexpected contact with opposing party troops, or change of mission objective.

Changes of weather conditions that could require modifying the mission plan could be bad weather clearing off, thereby improving visibility of the vehicles, and thus increasing the chance of detection, but also sudden changes to worse weather might require changes to the mission plan in case of a rescue operation or image recording mission for example.

If, contrary to prior planning, opposing troops are encountered, the mission might require amendments to either engage those troops or change the planned route to the mission target.

The generated plan might also be changed if the mission objective is changed, for example due to new information. Instead of one mountaineer to be rescued, newer information might indicate that a whole group requires evacuation or that the subject to be rescued has special transportation needs. Also, the location of the mission might be changed due to newer information, for example the animals to be filmed might have changed location or might have dived, making observation from flying vehicles impossible.

A mission planning device which can operate in one of several operation modes can support an operator with different levels of support depending on the operation mode. The mission planning device obtains the mission parameters, like the mission objective, present and to be expected weather conditions, opposite and allied troops in the area, geographical parameters, transmission frequencies to be used, etc., via a first interface.

The source of the mission parameters can be a different device, like a server or a mission parameter device, but could also be inputted into the mission planning device directly by means of input periphery like keyboard, mouse, pen, and data like images, weather reports, etc. Input of mission parameters to either the planning device directly or the mission parameter device can be supported and assisted by a program running on the device, where the parameters are input.

This program can have a graphical user interface, a text interface, or a combination of both. The program can also use audio input and output techniques, like text-to-speech and voice recognition. The mission parameters can be input by the operator or another person. The planning device can also implement the functionality of the mission parameter device, which is assumed for the following description and hence it is only referred to the planning device henceforth.

The operator can, via the first interface, set the operation mode before the mission, but can also switch the operation mode during the mission. The planning device can also determine the desired operation mode on the basis of the information it is provided with.

Further, the planning device can be implemented as distributed system, with optional redundant parts, such that processing devices of a predetermined part of the group, for example each vehicle, two vehicles, etc., can fully operate as planning device. Alternatively, the planning device is a central device present in only one vehicle. This can be a vehicle with or without operator.

The planning device may use a data model for modeling the mission, and the model can be static, modifiable by the operator, modifiable by the planning device, self-learning, or any meaningful combination thereof. The model represents the mission and the tasks that can be relevant to the fulfilling of the mission. The tasks can be vehicle-specific, employing the special capabilities or equipment of the individual vehicles of the group. Examples of such tasks are relocation of a vehicle from one place to another, transport of freight from one place to another, image recording in a specific place, or interaction with another vehicle like exchange of fuel, freight, or passengers, or transfer of information.

The planning device generates mission detail information on the basis of the mission parameters and a cost metric. The cost metric provides rules and constraints, which allow the planning device to generate the mission detail information most efficiently, wherein efficiency can be determined to be judged on one or more characteristics. For example, time, fuel consumption, least traveled distance, or the like. Environmental constraints can exist, for example, a task, e.g. a rescue task, can only be started if a check for radioactive radiation has a negative result.

With the mission detail information, the planning device has information that indicates which tasks are required to fulfill the mission. With the mission detail information, the planning device can analyze the situation and devise the best mission plan. The result is static in that it is valid at the time of generation for the parameters that are fed into the system. Usually the mission plan and the initial mission detail information are highly complex to cover all foreseeable deviations from the mission plan and as such will therefore not be reviewed by the operator. The operator usually knows the mission parameters and thus the mission objective.

The mission detail information comprises tasks and instructions for each vehicle, taking into account the individual vehicles capabilities. Each vehicle is sent the instructions pertinent to itself via a second interface. The second interface refers to machine to machine communication and therefore can easily be implemented with all benefits of machine communication, e.g. encryption and compression at high levels. The transmission can be effected via telecommunication, radio communication, optical wireless communication, using unguided visible, infrared, or ultraviolet light, which can be directed or undirected, laser communication, or wireless data communication, like Bluetooth or wireless LAN.

Optionally each vehicle is sent the instructions of all vehicles, such that each vehicle can take the place of another vehicle immediately. Each of the instructions refers to the tasks to be performed. The operator usually knows the tasks and the allocation to the group's vehicles.

The operator can, before and during the mission, change mission parameters or tasks, which can be parameters or tasks detailed above or additional parameters or tasks. These parameters or tasks can be input into the planning device via the first interface. The parameters might have been considered for the mission objective and therefore corresponding tasks are already stored in the planning device as a part of the main or alternative instructions. Alternatively, the parameters might have not been considered for the mission objective and therefore no corresponding tasks are stored.

The interaction of the operator with the planning device on the first interface can be implemented with a graphical user interface or a text interface. The interface can also be configured to accept and process speech input and to produce output via a speaker or headphone, using prerecorded audio files, using a text-to-speech interface, or something similar. Any combination of the above can also be used or the interface.

Individual elements of the mission can be addressed by the operator. These elements include locations, persons, groups of persons, vehicles, transmissions, freight, information, infrastructural parts, etc. The first interface can be implemented as a map display, indicating the elements at their location or, if they are not at a location shown in the currently viewed section of the map, can be placed by the operator.

Each element can be implemented as a so-called object, which refers to the data representation of the element. An object can be a variable, a data structure, a function, or a method, and as such, is a value in memory referenced by an identifier. Every object has status, behavior, and identity. An object's status comprises its attributes and relationships with other objects. An object's behavior is defined by its methods. And an object's identity is a unique identifier that allows an operator to address the correct object, even if two or more objects have the same status and behavior.

### BRIEF DESCRIPTION OF THE DRAWINGS

The above, as well as additional objects, features and advantages of aspects and embodiments of the disclosure, will be better understood through the following illustrative and non-limiting detailed description of embodiments of the present disclosure, with reference to the appended drawings, where the same reference numerals will be used for similar elements, wherein:
Fig. 1 shows operation mode 1 in comparison to operation modes 2 and 3 according to embodiments of the present disclosure.
Fig. 2 shows a schematic view of the operation modes according to embodiments of the present disclosure.
Fig. 3 shows a flow diagram comprising the method steps of the present disclosure.
Fig. 4 shows an example of a process of the present disclosure in the planning device.

### DETAILED DESCRIPTION

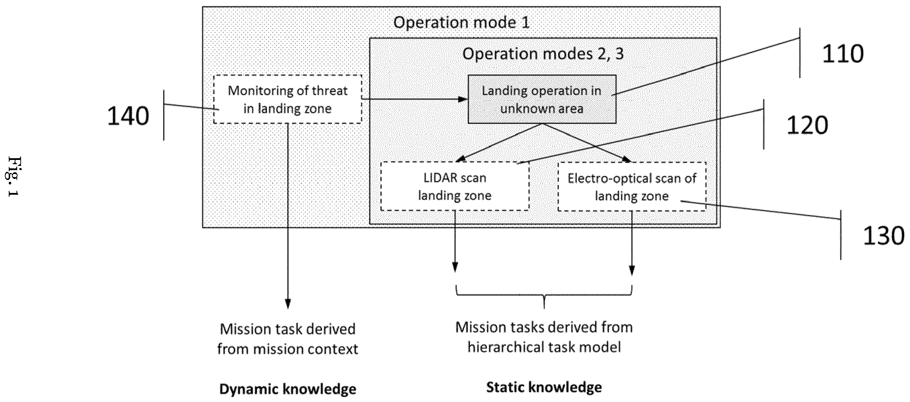

Referring to Fig. 1, based on the operation mode, the planning device can assign the tasks to the vehicles via the second interface. Exemplary in the following four different operation modes are described. Other operation modes are possible as well, in particular the characteristics of the four operation modes presented below can be combined unless they contradict or conflict with each other. Also, it is possible that a planning device can only operate in a selection of the presented operation modes or in a selection of combinations of the characteristics.

Fig. 1 shows differences between operation mode 1 and operation modes 2 and 3 using exemplary mission information. In operation modes 2 and 3 a complex mission task 110, which has been added by the operator, is divided into sub-tasks 120, 130 using the (static) mission task model. If a task can be divided into sub-tasks, a task is called complex. A task is called elementary if it cannot be divided further within the task model.

In operation mode 1, additionally, tasks, which are a result of the mission context, are dynamically considered. As an example, the task 140 "reconnaissance of the landing zone" is a result of the mission context only.

If the planning device is in operation mode 1, the planning device assigns each task to one or more of the group of vehicles. The instructions generated for each task are transmitted to the pertinent vehicles. The planning device can define dependencies and other constraints and can modify the mission parameters, tasks, and instructions accordingly.

Exemplary, in operation mode 1, a task can be modified by an operator, by object manipulation as follows. The planning device displays one or more objects on a display device in response to a corresponding request by the operator. The operator can select one or more objects by commonly known display interaction, like clicking or pointing, etc.

On a menu, which can be a context menu for the selected objects or a general menu which connects the menu's items to the selected objects, the planning device displays all available actions for the selected object. These actions can be generic object actions like deletion or renaming, or pre-generated during the step of generating the mission detail information and refer to mission tasks. The menu for the selected object can also be output via a speaker, using prerecorded audio files for each item in the menu, using a text-to-speech interface, or something similar.

Generic tasks are known to a skilled person, and will therefore not be discussed in the following.

The operator can select a task with relation to the selected object. If the object is a certain location, the available actions could refer to trips to or from that location, or persons, items, or troops at that location.

With the action selected by the operator, the planning device can assign or reassign a task that corresponds to the selected action to a vehicle, which is suitable for the selected action and task.

If the selected action is too complex or requires more than one vehicle, the planning device can divide the task into several sub-tasks, and assign the sub-tasks to one or more vehicles, respectively.

The planning device can then consider prerequisites and the overall mission objective, to determine additional required tasks and generate instructions to effectuate the determined required tasks. The planning device determines the one or more vehicles that are best suited to execute each of the determined tasks and transmits the instructions for the additional required tasks to these vehicles as described above via the second interface. Updated instructions can be sent to one or more of the vehicles.

The above steps can be performed iteratively, i.e. repeatedly as a loop.

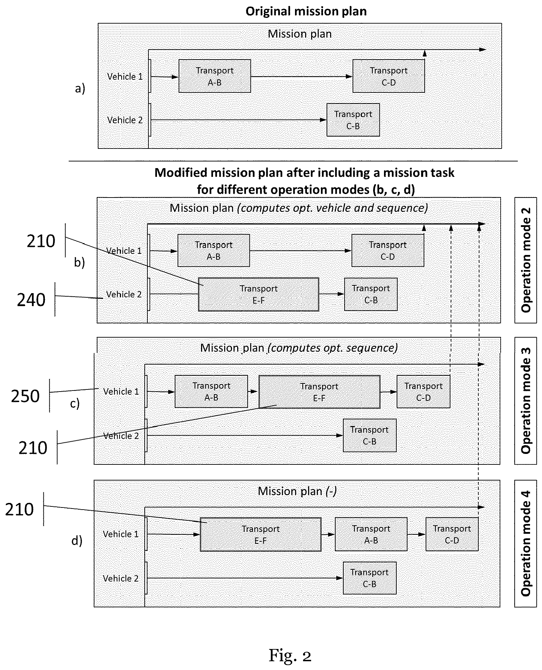

Referring to Fig. 2, an overview of the different operation modes is given. A mission task added by the operator is indicated by reference number 210. Fig 2a shows the initial mission plan prior to adding of a new mission task.

Operation mode 2 is similar to operation mode 1. The planning device does not consider prerequisites and the overall mission objective, to determine additional required tasks.

Exemplary, in operation mode 2, a task can be modified by an operator, by object manipulation as follows. The planning device displays one or more objects on a display device in response to a corresponding request by the operator. The operator can select one or more objects by commonly known display interaction, like clicking or pointing, etc. On a menu, which can be a context menu for the selected objects or a general menu which connects the menu's items to the selected objects, the planning device displays all available actions for the selected object. These actions can be generic object actions like deletion or renaming, or pre-generated during the step of generating the mission detail information and refer to mission tasks.

Generic tasks are known to a skilled person, and will therefore not be discussed in the following.

The operator can select a task with relation to the selected object. If the object is a certain location, the available actions could refer to trips to or from that location, or persons, items, or troops at that location.

With the action selected by the operator, the planning device can assign or reassign a task that corresponds to the selected action to a vehicle, which is suitable for the selected action and task.

If the selected action is too complex or requires more than one vehicle, the planning device can divide the task into several sub-tasks, and assign the sub-tasks to one or more vehicles, respectively. Updated instructions can be sent to one or more of the vehicles.

The above steps can be performed iteratively, i.e. repeatedly as a loop.

In Fig. 2b operation mode 2 is in use. The planning device inserts the new mission task at the best position with the best suitable vehicle. In the shown example a new mission task 210 is inserted as first task for vehicle 2, indicated by 240.

Again referring to Fig. 2, operation mode 3 is similar to operation mode 1 and 2, and will be described in detail below.

Exemplary, in operation mode 3, a task can be modified by an operator, by object manipulation as follows. The planning device displays one or more objects on a display device in response to a corresponding request by the operator. The operator can select one or more objects by commonly known display interaction, like clicking or pointing, etc. On a menu, which can be a context menu for the selected objects or a general menu which connects the menu's items to the selected objects, the planning device displays all available actions for the selected object. These actions can be generic object actions like deletion or renaming, or pre-generated during the step of generating the mission detail information and refer to mission tasks.

Generic tasks are known to a skilled person, and will therefore not be discussed in the following.

The first interface can have a setting which configures the planning device to calculate for each of the displayed actions which vehicle is best suited to execute the action. Depending on a further setting, one or more of these suited vehicles are displayed.

The operator can select an action and, a vehicle for execution of the action. If the list of the best suited vehicles is displayed, the operator can select a vehicle from this list.

The planning device then assigns a task that corresponds to the selected action to the selected vehicle. The instructions that are sent to the vehicle are configured such that the task is integrated into the overall mission plan and the vehicles executes other tasks in an efficient manner. This determination is similar to the generation of the mission detail information, and may take into account the cost metric from the generation of the mission parameters or a different cost metric.

If the selected action is too complex, the planning device can divide the task into several sub-tasks, and assign the sub-tasks to the selected vehicles. Updated instructions can be sent to one or more of the vehicles.

The above steps can be performed iteratively, i.e. repeatedly as a loop.

In Fig. 2c operation mode 3 is in use, and Fig. 2c shows specifying of a new mission task 220 and a vehicle by the operator. The planning device only generates the order of the tasks for the selected vehicle, vehicle 1, indicated by 250.

Again referring to Fig. 2, operation mode 4 is similar to operation mode 1, 2, and 3, and will be described in detail below.

Exemplary, in operation mode 4, a task can be modified by an operator, by object manipulation as follows. The planning device displays one or more objects on a display device in response to a corresponding request by the operator. The operator can select one or more objects by commonly known display interaction, like clicking or pointing, etc. On a menu, which can be a context menu for the selected objects or a general menu which connects the menu's items to the selected objects, the planning device displays all available actions for the selected object. These actions can be generic object actions like deletion or renaming, or pre-generated during the step of generating the mission detail information and refer to mission tasks.

Generic tasks are known to a skilled person, and will therefore not be discussed in the following.

The first interface can have a setting which configures the planning device to calculate for each of the displayed actions which vehicle is best suited to execute the action. Depending on a further setting, one or more of these suited vehicles are displayed for each action.

The operator can select one or more actions, their temporal order, and, if displayed, one or more vehicles for execution of the action. If the list of the best suited vehicles is displayed, the operator can select vehicles from this list.

The planning device then assigns tasks that correspond to the selected actions to the selected vehicles. The instructions that are sent to the vehicle are configured such that the overall mission plan is modified and the timings of the other mission tasks are amended. Updated instructions can be sent to one or more of the vehicles.

If the selected action is too complex, the planning device can divide the task into several sub-tasks, and assign the sub-tasks to the selected vehicles.

The above steps can be performed iteratively, i.e. repeatedly as a loop.

In Fig. 2d operation mode 4 is in use, and Fig. 2d shows specifying of a new mission task 230, the order of tasks, and a vehicle by the operator.

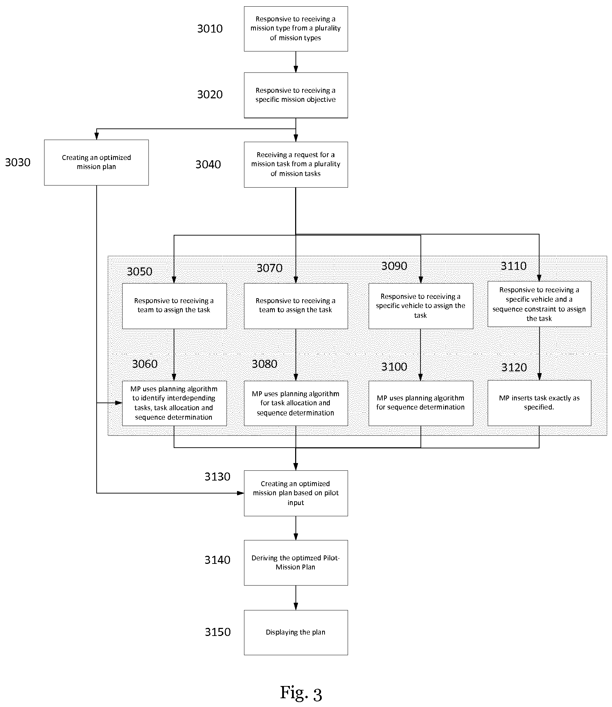

As can be seen in Fig. 3, the planning device optionally generates in all operation modes, the best mission plan, taking into account all possible options. As detailed above, the mission plan is not reviewed by the operator. In operation modes 1, 2, and 3 the planning device can identify all required tasks and form a set of all tasks that include the tasks from the mission plan and the tasks specified by the operator. With this set of tasks, the planning device can start the process of planning the mission in the operation modes 1, 2, and 3.

In more detail, Fig. 3 shows different possibilities for the execution of the planning process. The operator optionally specifies a mission type from a selection of mission types in step 3010 and the mission objective in step 3020. The steps 3010 and 3020 can be combined into one step optionally.

Optionally, the planning device can then by generating a mission plan based thereon identify required and optional mission tasks in step 3030. As detailed above, the mission plan is not disclosed to the operator.

In step 3040 the planning device obtains the mission information, including mission tasks, from another device or person. The operator can then use planning device and specify one or more mission tasks using one of the operation modes of the planning device as follows.

Depending on the operation mode, then in operation mode 1, the operator can specify mission tasks to the planning device in step 3050. The planning device can then determine dependencies of and between these tasks. If a mission plan was generated in step 3030, a mission type was specified in step 3010 and/or a mission objective was specified in step 3020, this information can be used for this determination. If dependent mission tasks are determined, these are assigned together with the mission tasks specified by the operator in step 3050 using a planning algorithm and a cost metric in step 3060 to one or more vehicles. Thereby instructions for the vehicles are generated. Step 3060 can include transmitting the instructions for the assigned tasks to the corresponding vehicles.

If the planning device cannot resolve emerging dependencies during its calculations, the planning device can optionally indicate the conflict to the operator and use the operator's response in the further calculation.

If the planning device is operating in operation mode 2, the operator assigns the mission tasks to the planning device in step 3070, which assigns the specified tasks using a planning algorithm and a cost metric in step 3080 to one or more vehicles. Thereby instructions for the vehicles are generated. Step 3080 can include transmitting the instructions for the assigned tasks to the corresponding vehicles.

If the planning device is operating in operation mode 3, the operator additionally selects a vehicle for each task in step 3090. The planning device then determines the best order of mission tasks for the selected vehicle in step 3100. If the mission task is complex, it can only be assigned to the vehicle, if the dependencies of the sub-tasks permit this. Thereby instructions for the vehicles are generated. Step 3100 can include transmitting the instructions for the assigned tasks to the corresponding vehicles.

If the planning device is operating in operation mode 4, the operator additionally selects the order of tasks for each vehicle in step 3110. The planning device then assigns the tasks to the vehicles as selected by the operator in step 3120. Thereby instructions for the vehicles are generated. Step 3120 can include transmitting the instructions for the assigned tasks to the corresponding vehicles.

In all operating modes, the transmission of the instructions to the vehicles is performed via the second interface. The characteristics of the operations modes can be mixed.

In all operating modes, the planning device then can optionally generate in step 3130 the optimized mission plan based the results of the corresponding one of steps 3060, 3080, 3100, and 3120. If mission type, mission objective and/or mission plan are available from steps 3010, 3020, and 3030, respectively, these information can be considered as well. Step 3130 can also include transmitting the instructions for the assigned tasks to the corresponding vehicles.

If the vehicle of the operator is one of the vehicles of the mission plan, the instructions for this vehicle can be determined in step 3140 and displayed to the operator in step 3150. In step 3150, alternatively, the complete mission can be displayed in real time or projected view. Alternative output, like detailed above, e.g. speech or other audio output, is also possible.

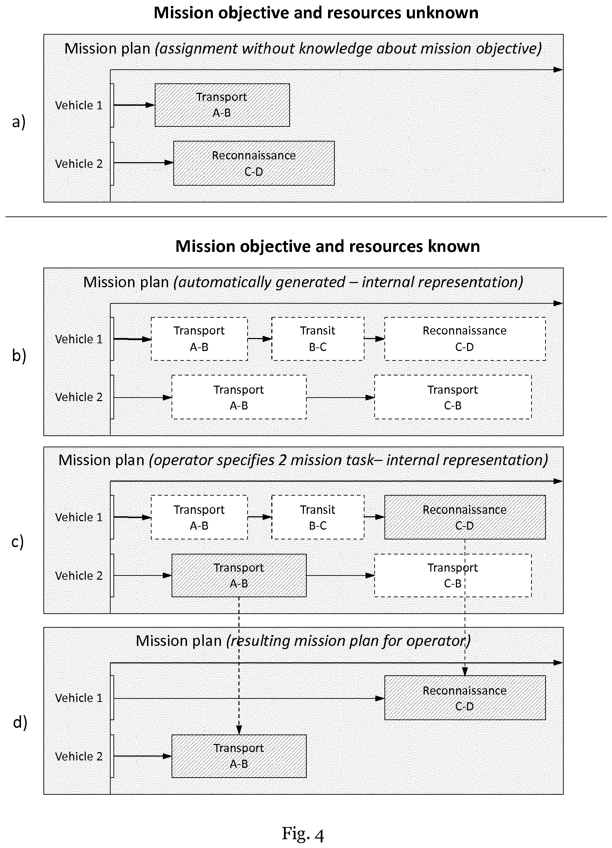

Fig. 4 shows the process of planning a mission, including assigning of mission tasks and sequential order, in the planning device.

Fig 4a shows the mission without background knowledge of the mission objective. Figs. 4b, 4c, and 4d show the mission with background knowledge of the mission objective.

Fig. 4a shows the insertion of mission tasks without background knowledge of the mission objective. The planning device optimizes only with regard to the predetermined cost metric, for example shortest time, shortest route, etc. Figs. 4b, 4c, and 4d show the planning process under consideration of the mission objective.

Fig. 4b shows the internal mission plan for two vehicles and five mission tasks which are required for fulfillment of the mission, wherein the mission plan is automatically generated on the basis of selected mission objective.

Following from Fig. 4b, Fig. 4c shows a case of operation mode 1, where the operator already specified two mission tasks. The planning device already had determined the necessity for the exactly same two mission tasks by using the internal mission plan.

Following from Fig. 4c, Fig. 4d shows the resulting plan, which is displayed or otherwise made known to the operator. The difference to Fig. 4a is clear.

Following deviations from the described subject-matter above are also considered: The cost metric could be dependent on the selected mission objective. If the mission objective is changed, a different cost metric could be employed for the corresponding determinations.

The currently used cost metric can be changed by the operator via the first interface. Limiting parameters can be defined for each mission type and used for generating the mission plan with predetermined but changeable weights.

Since several possible tasks require special equipment, for example a robotic arm or a wrench, the mission plan could also consider this equipment individually, even if they are not installed on a vehicle.

If a system as described above has only one mission type, the interface and step for selecting the mission type can be omitted.

While some embodiments have been described in detail it is to be understood that aspects and embodiments of the disclosure can take many forms. In particular, the claimed subject matter may be practiced or implemented differently from the examples described and the described features and characteristics may be practiced or implemented in any combination. The embodiments shown herein are intended to illustrate rather than to limit the invention as defined by the claims.

### Reference list

- 110: Divisible, complex mission task
- 120: Subtask
- 130: Subtask
- 140: Context only mission task
- 210: Mission task added by operator
- 240: Vehicle 2
- 250: Vehicle 1
- 3010: Step of specifying mission type
- 3020: Step of specifying mission objective
- 3030: Step of generating a mission plan
- 3040: Step of obtaining mission information
- 3050: Step of specifying mission tasks
- 3060: Step of transmitting instructions to vehicle
- 3070: Step of assigning mission tasks to planning device
- 3080: Step of transmitting instructions to vehicle
- 3090: Step of selecting vehicle
- 3100: Step of transmitting instructions to vehicle
- 3110: Step of selecting order
- 3120: Step of transmitting instructions to vehicle
- 3130: Step of generating optimized mission plan
- 3140: Step of determining instructions for vehicle
- 3150: Step of displaying instructions

## Claims

1. A computer-implemented method for controlling at least one vehicle in a group of vehicles by a planning device operating in one of a plurality of operation modes and having mission parameters stored therein, the method comprising:
obtaining (3040), at the planning device, a mission plan and mission parameters, the mission parameters including at least one mission task,
receiving (3050, 3070, 3090, 3110), by the planning device, additional configuration data;
assigning (3060, 3080, 3100, 3120), by the planning device, each mission task to one vehicle, and generating (3060, 3080, 3100, 3120), by the planning device, instructions for each mission task based on the mission plan, the mission parameters, the operation mode, and the additional configuration data; and
transmitting, by the planning device, to each vehicle the corresponding instructions for each assigned mission task.

2. The method according to claim 1, wherein
the step of generating (3060) further comprises determining further dependent mission tasks based on the mission tasks included in the mission parameters and the mission plan; and
if dependent mission tasks are determined, the step of assigning (3060) further comprises assigning each of the determined dependent mission tasks to one vehicle using a planning algorithm and a cost metric, the step of generating (3060) further comprises instructions for each of the dependent mission tasks, and the step of transmitting further comprises transmitting each of the instructions for the determined dependent mission tasks to the assigned vehicles.

3. The method according to claim 1 or 2, wherein
the step of assigning (3080) further comprises assigning each of the mission tasks to one vehicle using a planning algorithm and a cost metric.

4. The method according to one of the previous claims, wherein
the additional configuration data comprises selection of the vehicle from the group of vehicles;
the step of generating (3100) further comprises determining based on a cost metric the best order of mission tasks for the selected vehicle; and
the step of assigning (3100) comprises assigning each mission task to the selected vehicle on the basis of the determined order.

5. The method according to one of the previous claims, wherein
the additional configuration data comprises selection of the vehicle from the group of vehicles and a selected order of mission tasks;
the step of assigning (3120) comprises assigning each mission task to the selected vehicle on the basis of the selected order.

6. The method according to one of the previous claims, further comprising in
dicating a dependency conflict to an operator, if dependencies cannot be resolved by the planning device.

7. The method according to claim 6, further comprising
receiving a response from the operator; and
resolving the dependency conflict on the basis of the operator's response.

8. The method according to one of the previous claims, further comprising d
etermining, whether one of the mission tasks can be divided into sub-tasks, and
dividing mission tasks that are determined to be divisible into sub-tasks.

9. A planning device, configured to execute a method according to one of claims 1 to 8.

10. The planning device according to claim 9, further comprising at least one interface for data input and/or data output, wherein preferably the at least one interface is configured to use graphical, text or audio elements.

11. The planning device according to claim 9 or 10,
wherein the planning device can be installed in one vehicle of a group of vehicles; or
installed in more than one vehicle of the group of vehicles, wherein the planning device is implemented as a distributed processing device.

12. The planning device according to claim 9 or 10, installed at a location distant to the vehicles.

13. A vehicle equipped with a planning device according to claim 9, 10 or 11.

14. A computer program product including a program for a processing device, comprising software code portions for performing the steps of any one of claims 1 to 8 when the program is run on the processing device.

15. A computer program product according to claim 14, wherein the computer program product comprises a computer-readable medium on which the software code portions are stored, wherein the program is directly loadable into an internal memory of the processing device.
